# EUROPEAN PATENT APPLICATION

(11) **EP 1 296 437 A1**
(43) Date of publication of application: **26.03.2003**
(21) Application number: 02017946.1
(22) Date of filing: 09.08.2002
(51) Int. Cl.: H02K 1/27, H02K 21/02, H02K 21/14

(54) **Internal permanent magnet synchronous motor**

(30) Priority: 20.09.2001 JP 2001286504
(71) Applicant: Nissan Motor Co., Ltd., Yokohama-shi, Kanagawa (JP)
(72) Inventor: Yonekura, Koichiro, Kamakura-shi, Kanagawa (JP)
(74) Representative: Weber, Joachim, Dr.

(57) **Abstract**

A internal permanent magnet synchronous motor (1) according to this invention comprises a cylindrical stator (2) which has a tooth (5), and a rotor (14) which rotates on its inner side. This tooth (5) is provided with a coil (11), the width in the circumferential direction of the tip part (5B) of the tooth (5) being narrower than the width in the circumferential direction of the coil (11). Thereby, the harmonic component of the voltage or current is reduced.

## Description

### FIELD OF THE INVENTION

This invention relates to an internal permanent magnet synchronous motor (IPM).

### BACKGROUND OF THE INVENTION

JP2000-69717A published by the Japanese Patent Office in 2000 discloses an IPM wherein the coil end part is made more compact and the manufacturing process is simplified by concentrating coil windings in the stator.

In this IPM, a tooth tip part spreads like an umbrella toward the motor axial center. This aims to reduce leakage of magnetic flux generated by the permanent magnet in the rotor so as to increase the motor torque. It also aims to reduce the variation of the magnetic reluctance of the permanent magnets due to rotation of the rotor, and thereby reduce distortion in the magnetic flux waveform relative to the rotor rotation angle.

### SUMMARY OF THE INVENTION

However, the inductance seen from the coil will be largely distorted from a sine waveform due to the umbrella-like expansion of the tooth tip part. Moreover, even if a sinusoidal voltage is applied to each phase of the motor coils, the current will not be a sine wave and the waveform will include harmonics. Conversely, even if current control is performed by an inverter or the like installed externally so that the current is a sine wave, harmonic components will appear in the voltage required to maintain the desired current value.

It is therefore an object of this invention to reduce harmonic components in the voltage of an IPM. To achieve above object, an internal permanent magnetic synchronous motor of this invention comprises a cylindrical stator that comprises a tooth comprising a tooth tip part and a coil winding part around which a coil is wounded, and a rotor that has a permanent magnet and rotates inside the stator. A circumferential width of the tooth tip part on a rotor side of the tooth is smaller than a circumferential width of the coil.

The details as well as other features and advantages of this invention are set forth in the remainder of the specification and are shown in the accompanying drawings.

### BRIEF DESCRIPTION OF THE DRAWINGS

Fig. 1 is a schematic diagram of an internal permanent magnet synchronous motor according to this invention.

Fig. 2 is a diagram describing the form of the tooth tip part according to this invention.

Fig. 3 is a diagram describing an inductance according to this invention.

Fig. 4 is a schematic diagram of a second embodiment of this invention.

Fig. 5 is a schematic diagram of a third embodiment of this invention.

Fig. 6 is a schematic diagram of a fourth embodiment of this invention.

### DETAILED DESCRIPTION OF THE INVENTION

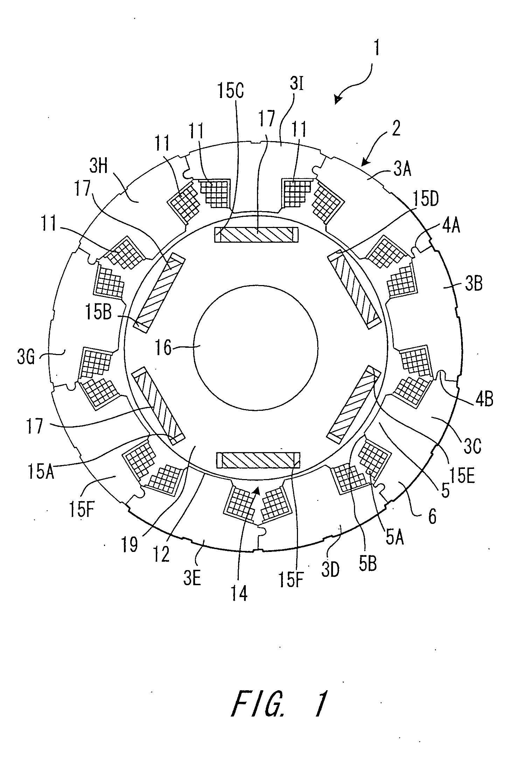

Referring to Fig. 1, which is a cross-sectional view of an internal permanent magnet synchronous motor (IPM) according to this invention, the IPM comprises a cylindrical stator 2 comprising a coil 11, and a rotor 14 which rotates inside the stator 2.

A stator core 3 comprises 9 sets of members 3A-3I having an identical shape arranged to form a circle.

Each of the members 3A-3I which form the stator core 3 comprises a tooth 5 which projects toward an axial center, and base 6 which are disposed on the outer circumference of the tooth 5 and fit together.

At the base 6 of the stator core 3, a projection 4A projects in the circumferential direction from one side of contact surfaces, and a depression 4B on the other contact surface fits with the projection 4A of the adjacent members 3A-3I. This prevents gaps from occurring in the radial direction of the pieces 3A-3I.

The tooth 5 further comprise a coil winding part 5A of oblong cross-section- and a tooth tip part 5B which tapers thinner towards the axis from the coil winding part 5A. The coil is winded on the coil winding part 5A.

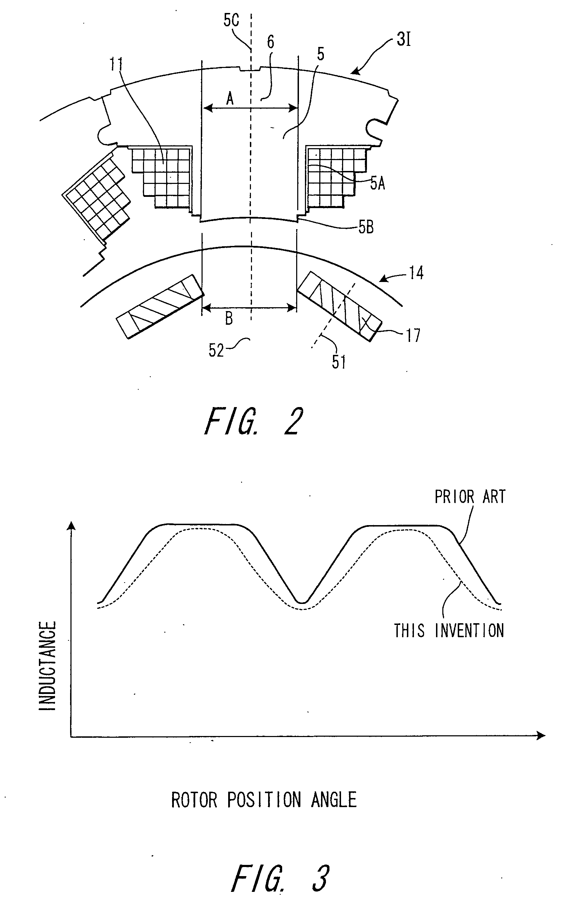

The tooth tip part 5B need not be taper-like, and the tooth tip part 5B may become narrower in a stepwise shape towards the axis as shown in Fig.2.

On the other hand, inside the cylindrical stator 2, the cylindrical rotor 14 is disposed across a small air gap 12 with the inner circumference of the stator 2. This rotor 14 is supported free to rotate in a motor case to which the stator 2 is fixed.

The rotor 14 supports a rotor core 19 formed by laminating plural doughnut-shaped steel plates in the axial direction of the shaft 16 in the same way as the stator core 3. The rotor 14 comprises oblong permanent magnets 17 embedded in the axial direction in six slots 15A-15F provided at equal intervals in the vicinity of the outer circumference of the rotor cores 19.

According to this invention, the circumferential width of the tooth tip part 5B is smaller than the circumferential width of the coil 11 wound on the coil winding part 5A of the member 3A-3I.

Next, referring to Fig. 2, relation between the coil 11 wound on the coil winding part 5A of the members 3A-3I and the permanent magnets 17 embedded in the rotor 14, will be described.

The inductance viewed from the coil 11 relative to the rotation angle of the rotor 14 is minimized when a center 51 of the permanent magnet 17 overlaps with a center 5C of the tooth tip part 5B. At this time, the reluctance viewed from the coil 11 is a maximum.

Conversely, the inductance is a maximum and magnetic losses are minimized when a midway point 52 between two adjacent permanent magnets 17 overlaps with the center 5C of the tooth tip part.

Here, let the interval between the permanent magnets 17 of the rotor 14 be B. As the permanent magnets 17 are disposed at equal intervals in the rotor 14, the intervals B between the permanent magnets are identical for all of the permanent magnets 17. This inductance is effectively a maximum when the permanent magnet interval B which is the interval between two adjacent permanent magnets 17, is below the tooth tip part 5B, and hardly varies until the interval B passes under the tooth tip part 5B.

For this reason, when a sine wave current is passed through the coil 11, ferrous loss in the iron forming the stator 2 and rotor 14 increases and the motor efficiency falls. Moreover, if the current flowing the coil is controlled to be a sine wave, as it is driven at a current and voltage limited below the maximum values of the current voltage by the power supply or inverter provided externally, the effective fundamental component considering the maximum value of the highest harmonic decreases, and the motor output falls.

According to the prior art, the tooth tip part has a form which extends facing the rotor, so when the rotor rotates, the distance which the magnet interval passes through in the width of the circumferential direction of the tooth tip part increases.

On the other hand, according to this invention, it is formed so that the width A in the circumferential direction of the tooth tip part is smaller than the width in the circumferential direction of the coil 11.

Therefore, since the width A of the tooth tip part 5B is smaller, the distance over which the permanent magnet interval part B passes through the width A of the tooth tip part is short.

Referring to Fig. 3, the variation of inductance relative to the rotation angle of the rotor 14 will be described.

The inductance generated by the tooth tip part of the prior art shown by a solid line is flat in the vicinity of the maximum. This is because the region where the magnet interval part B passes under the umbrella-like tooth tip part is large. In this region, the inductance is effectively a maximum and hardly varies, as described above. This waveform comprises harmonics, and is not a sine wave which is the preferred inductance waveform.

On the other hand, for the inductance generated by the tooth tip part 5B of this invention shown by the broken line, the flat region in the vicinity of the maximum decreases. This is because, as the width A in the circumferential direction of the tooth tip part 5B is smaller, the distance over which the magnet interval B of the rotor 41 passes through the width A of the tooth tip part, decreases.

Thereby, the waveform of the inductance approaches the waveform of a sine wave which does not contain harmonics, which is a desirable waveform.

Therefore, when a sinusoidal voltage is applied to the coil 11 of the IPM 1, as increase of the core loss generated inside the steel plate forming the stator 2 and rotor 14 is suppressed, the efficiency of the IPM 1 improves. Moreover, as the maximum value of the higher harmonics can be made small when controlling the current flowing through the coil 11 to be a sine wave, the effective fundamental wave component increases and the output of the IPM 1 improves.

It might be considered that an identical effect might be obtained by making not only the tooth tip part 5B narrow, but instead, by making the whole of the tooth 5 narrow, but in general, a greater width in the circumferential direction of the tooth 5 permits an increase of motor torque.

Therefore, in order to reduce harmonic components without having an adverse influence on the motor torque, the form of this invention where only the tooth tip part 5B is made thin is more effective.

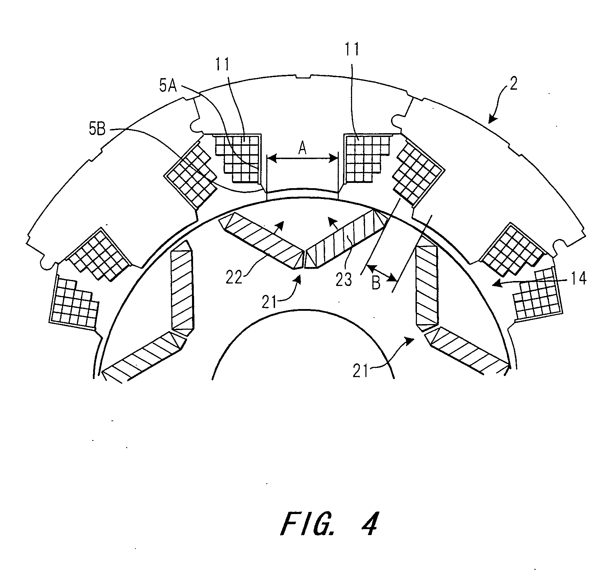

Next, a second embodiment of this invention will be described referring to Fig.4. According to this embodiment, instead of the permanent magnets 17, the rotor 14 is provided with two permanent magnet parts 22, 23 disposed in a V shape so as to form an opening towards the stator 2. These permanent magnet parts 22, 23 form a permanent magnet 21 having one pole.

The other constituent features are identical to those of the first embodiment. Identical reference numbers are also given to the same component parts as those of the first embodiment.

In order to increase the torque of the IPM 1, it is necessary to increase the size of the permanent magnet 17 embedded in the rotor 14. However, if the size of the permanent magnet 17 is made large in the direction of the circumference, it will be necessary to enlarge also the tooth tip part width A.

This is because at both ends of the permanent magnet 17 which extend beyond the tooth 5, a self-loop or magnetic flux which shorts the adjacent permanent magnet 17 increases. Moreover, the reluctance viewed from the permanent magnet 17 becomes large, and the magnetic flux which the permanent magnet 17 generates decreases.

Thus, if the permanent magnet 17 comprises one permanent magnet and its size is enlarged, the interval B between the magnets will decrease and the tooth tip width A will increase. This brings about an increase in the region in which the inductance does not vary in the vicinity of the maximum.

According to this embodiment, the magnetic flux can be increased by forming the V-shaped magnet 21 with the two permanent magnet parts 22, 23 without increasing the width in the circumferential direction of the magnet 21. Therefore, it is not necessary to increase the interval B between the magnets and the tooth tip width A.

Moreover, as the arrow in Fig. 4 shows, the magnetic flux is concentrated toward the center of the permanent magnet 21 by making the magnetization direction of the permanent magnet parts 22, 23 perpendicular to the longitudinal direction of the permanent magnet parts 22, 23. Therefore, even if the tooth tip part 5B of the stator 2 is made thin, there is almost no effect on the torque.

Therefore, the torque of the IPM 1 is increased and harmonics can be reduced by disposing the permanent magnet parts 22, 23 in a V shape in the rotor 14 instead of the permanent magnet 17. An identical effect can be obtained by giving the V-shaped permanent magnet 21, a U shape.

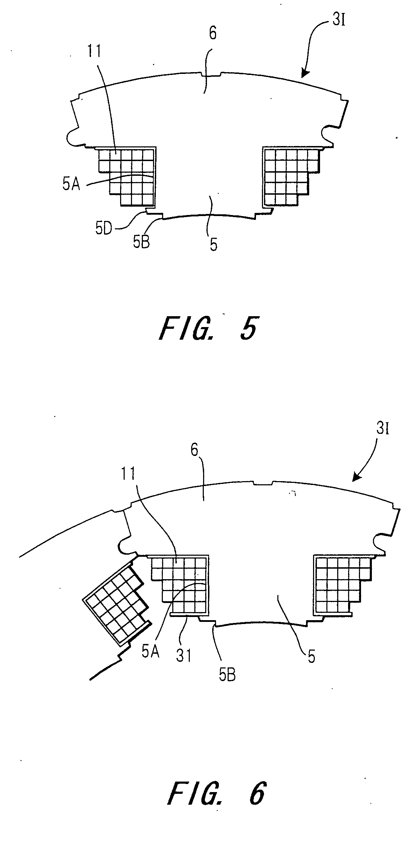

Next, a third embodiment will be described referring to Fig. 5. According to this embodiment, a protrusion 5D which projects in the direction of a circumference is provided at a boundary between the tooth tip part 5B and coil winding part 5A in order to hold the coil 11.

The remaining features are identical to those of the first embodiment, and identical reference numbers are given to identical parts.

The coil 11 may be installed by inserting it between the gaps between the stator teeth 5, or the coil 11 may be formed by winding copper wire directly around the coil winding part 5A.

In either of these methods, if the tooth tip part 5B of the stator 2 is formed thinner than the coil winding part 5A, the position of the coil 11 may shift or the coil may fall out due to vibration caused by rotation of the motor. Moreover, if the coil is formed by winding copper wire directly around the coil winding part 5A, the winding position of the coil 11 is not fixed and workability is impaired.

Therefore, the shift or dropout of the coil 11 is prevented by providing the protrusion 5D at the boundary between the tooth tip part 5B and the coil winding part 5A. Workability when the copper wire is wound directly around the coil winding part 5A can be improved.

Next, a fourth embodiment of this invention will be described referring to Fig. 6. According to this embodiment, a slot insulator 31 is formed whereby the tooth 5 holds the coil 11. This slot insulator cell 31 comprises a resin composition which is an insulating material having a shape of a bobbin.

The remaining features are identical to those of the first embodiment, and identical reference numbers are given to the same component elements.

Thereby, an identical effect to that of the fourth embodiment can be obtained.

According to this specification, a 6 pole, 9 slot motor was described wherein there are 9 of the tooth 5 of the stator 2 and 6 of the permanent magnets 17 inside the rotor 14, however the invention may also be applied to a motor comprising a different number of permanent magnets and a different number of slots.

The entire contents of Japanese Patent Application P2001-286504 (filed on September 20, 2001) are incorporated herein by reference.

Although the invention has been described above by reference to certain embodiments of the invention, the invention is not limited to the embodiments described above. Modifications and variations of the embodiments described above will occur to those skilled in the art, in light of the above teachings. The scope of the invention is defined with reference to the following claims.

## Claims

1. An internal permanent magnetic synchronous motor comprising:
a cylindrical stator (2) that comprises a tooth (5) comprising a tooth tip part (5D) and a coil winding part (5A) around which a coil (11) is wounded; and
a rotor (14) that has a permanent magnet (17, 21) and rotates inside the stator,
wherein a circumferential width (A) of the tooth tip part (5B) on a rotor side of the tooth is smaller than a circumferential width of the coil.

2. The internal permanent magnetic synchronous motor as defined in Claim 1, wherein the coil (11) has a concentrated winding.

3. The internal permanent magnetic synchronous motor as defined in Claim1, wherein the permanent magnet (17, 21) forms a V or U-shape having an opening directed toward the stator.

4. The internal permanent magnetic synchronous motor as defined in Claim1, wherein the permanent magnet (21) comprises plural parts of permanent magnet (22, 23) that are arranged to form a V or U-shape having an opening toward the stator.

5. The internal permanent magnetic synchronous motor as defined in Claim1, wherein the plural parts of permanent magnet (22, 23) are magnetized in a vertical direction to a longitudinal direction of the plural parts of permanent magnet.

6. The internal permanent magnetic synchronous motor as defined in Claim1, wherein, at a boundary between the tooth tip part and the coil winding part, the tooth has a protrusion (5D) that extends circumferential direction for retaining the coil.

7. The internal permanent magnetic synchronous motor as defined in Claim1, wherein the tooth has a slot insulator (31) that retains the coil.
